# EUROPEAN PATENT SPECIFICATION

(11) **EP 2 371 604 B1**
(45) Date of publication and mention of the grant of the patent: **23.05.2012**
(21) Application number: 10425094.9
(22) Date of filing: 25.03.2010
(51) Int. Cl.: B60K 15/03, F17C 1/00, B60K 1/04, H01M 2/10

(54) **Device for removably anchoring a LPG tank to the structure of a motor-vehicle**
Vorrichtung zur entfernbaren Verankerung eines LPG-Tanks an die Struktur eines Kraftfahrzeugs
Dispositif pour l'ancrage amovible d'un réservoir de GPL à une structure de véhicule à moteur

(43) Date of publication of application: 05.10.2011
(73) Proprietor: Fiat Group Automobiles S.p.A., 10135 Torino (TO) (IT)
(72) Inventor: Fiore, Nicola, 10135 Torino (IT); Costantino, Massimo, 10135 Torino (IT); Sardo, Davide, 10135 Torino (IT)
(74) Representative: Notaro, Giancarlo

(56) References cited:
- WO-A1-2009/082250

## Description

### Field of the invention

The present invention relates to a device for anchorage of an LPG tank to the structure of a motor vehicle.

The invention relates in general to LPG tanks for motor vehicles of the type comprising a metal casing of a toroidal shape, defining an annular chamber for containing LPG,
wherein said casing includes a cylindrical wall on the radially internal side of said annular chamber;
wherein fixed within said cylindrical wall is a metal wall for anchorage of the tank;
wherein said anchoring wall is situated in a position axially at a distance from the resting surface of the tank on the floor panel of the motor vehicle;
wherein said casing is moreover provided with a sleeve defining a guide passage for cables and service pipes through said anchoring wall and through the floor panel of the motor vehicle; and
wherein moreover associated to said tank are screw connection means for removably blocking said anchoring wall on the floor panel.

### Known art

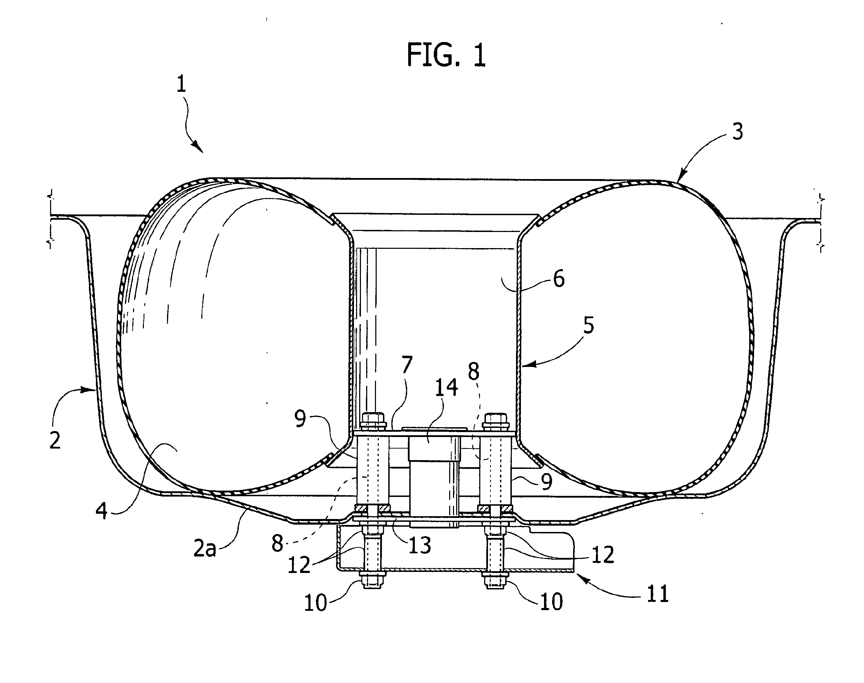

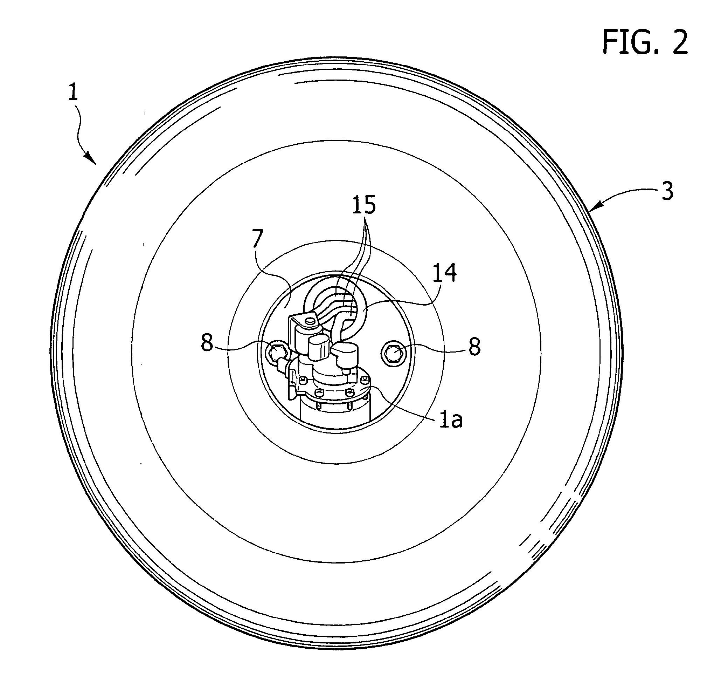

Figures 1 and 2 of the annexed drawings show an example of LPG tank of the type specified above, as installed on a motor vehicle produced and marketed by the present applicant. In said figures, the reference number 1 designates as a whole the LPG tank, which is received and fixed within a receptacle portion 2 of the floor panel of the motor vehicle, originally designed to receive the spare wheel provided along with the motor vehicle. Figure 1 shows a cross-sectional view in
a vertical plane of the tank in the mounted condition, whilst Figure 2 shows a top plan view of the tank taken in itself. The reference number 3 designates the metal casing of the tank 1, of a toroidal shape, defining an annular chamber 4 for containing LPG. The chamber 4 is delimited on its radially internal side by a cylindrical wall 5 that is rigidly connected in a sealed way, by means of welding, to the remaining part of the casing 3. The space 6 inside the wall 5 is delimited at its bottom end by an anchoring wall 7 made of sheet metal, seal-welded within the cylindrical wall 5. As may be seen in Figure 1, the wall 7 is in a raised position with respect to the resting surface of the tank 1 on the bottom wall 2a of the receptacle portion 2 of the floor panel of the motor vehicle so that the wall 7 is set at a distance from the central portion of the wall 2a. The tank 1 is anchored to the aforesaid bottom wall 2a by means of a pair of screw tie rods 8, each of which traverses both the wall 7 of the tank and the bottom wall 2a of the floor panel, as well as a spacer bushing 9 set between the wall 7 and the wall 2a. Each tie rod 8 has a top head that rests on the plate 7 and has its bottom end engaged by a fixing nut 10 so as to block underneath the wall 2a of the floor panel a guard 11 for the protection of cables and service pipes 15 (illustrated only in Figure 2) associated to a service assembly 1a projecting within the wall 5 (which is also illustrated only in Figure 2) and exiting underneath the floor panel. Further spacer bushings 12 and a counterplate 13 are set between the wall of the guard 11 and the bottom wall 2a of the floor panel. The cables and the service pipes 15 that branch off from the assembly 1a are guided through the anchoring wall 7 and through the wall of the floor panel 2a via a sleeve 14, made of plastic material, which is inserted through circular openings (not coaxial to the tank, as may be seen in Figure 2) made in the walls 7, 2a and 13. The sleeve 14 has a widened head resting on the wall 7 and has a bottom end projecting underneath the wall 2a of the floor panel and of the counterplate 13.

The known device described above presents the drawback of entailing relatively long and laborious assembly operations, which are far from compatible with mass-production requirements, as is precisely the case of a motor vehicle which is to be equipped right from the start with an LPG fuel-supply system. Furthermore, the plastic sleeve 14 does not provide a perfect seal against LPG vapours.

### An LPG tank as set forth in the preamble of claim 1 is disclosed in

WO 2009/082250 A1**.**

### Object of the invention

The object of the present invention is to overcome the aforesaid drawbacks with simple and low-cost means, which will in particular enable simplification and facilitation of the operations of anchorage of the LPG tank on the motor vehicle guaranteeing at the same time a perfect seal both from the standpoint of safety of the connection and from the standpoint of protection against leakage of gas vapours.

### Summary of the invention

With a view to achieving said object, the subject of the invention is an LPG tank for motor vehicles presenting all the characteristics that have been indicated in claim 1.

### Brief description of the drawings

A preferred embodiment of the invention will be described in what follows with reference to the annexed drawings, which are provided purely by way of nonlimiting example and in which:
Figures 1 and 2 are an axial-sectional axial view and a top plan view, respectively, of the tank according to the known art;
Figures 3 and 4 illustrate a corresponding sectional view and a corresponding top plan view of a preferred embodiment of the tank according to the invention;
Figure 5 is an exploded perspective view of the tank of Figures 3 and 4;
Figure 6 is a view at an enlarged scale of a detail of Figure 3;
Figure 7 is a perspective view from beneath of the detail of Figure 6;
Figures 8-10 are perspective views of further details of the tank according to the invention; and
Figure 11 is a view from beneath of the portion of floor panel of the motor vehicle on which the tank is fixed.

### Detailed description of a preferred embodiment

Figures 1 and 2, which regard the known art, have already been described above.

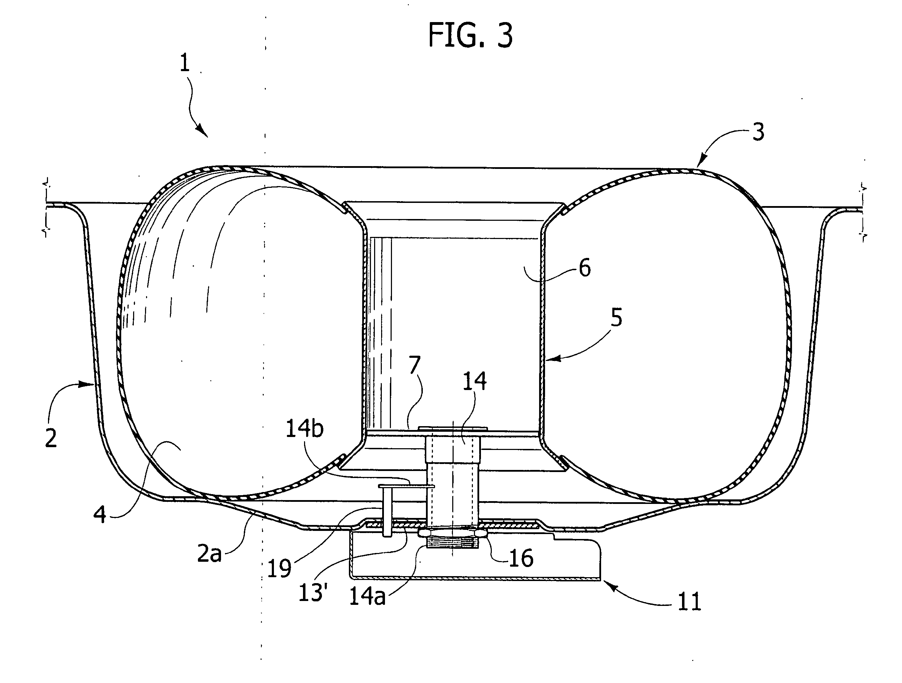

In Figures 3-11, the parts corresponding to those of Figures 1 and 2 are designated by the same reference numbers.

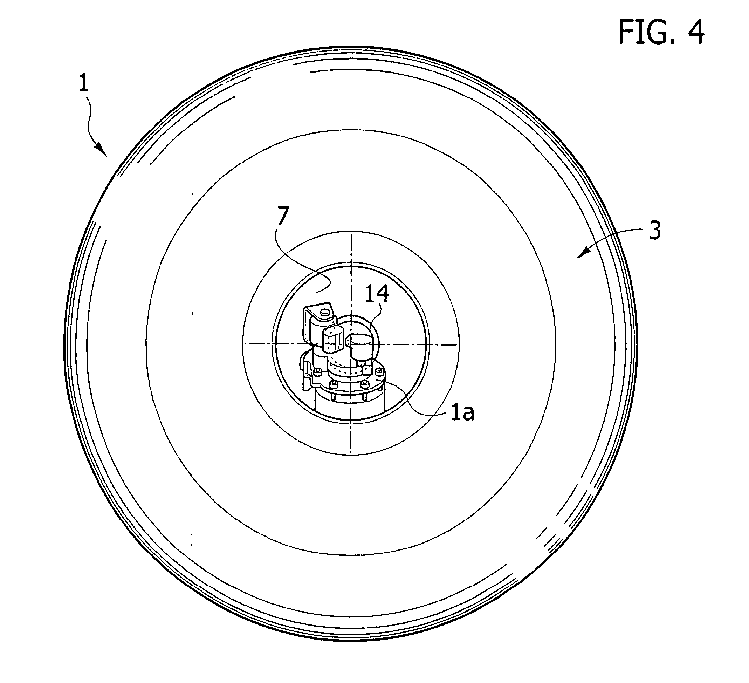

The main difference of the tank according to the invention with respect to the known one illustrated in Figures 1 and 2 lies in the fact that the two screw tie rods 8 illustrated in Figure 1 are eliminated and anchorage of the tank to the floor panel of the motor vehicle is obtained using as screw connection element the same sleeve 14 that provides a guide for the cables and service pipes. In the case of the invention, the sleeve 14 is made of metal material and is seal-welded to the anchoring wall 7 of the tank. The sleeve 14 has a bottom end portion 14a threaded on the outside, which projects underneath the floor panel and is engaged by an annular blocking ring nut 16. Consequently not only the screw tie rods 8, but also all the parts that in the known solution of Figure 1 are associated to the tie rods, as in particular the spacer bushings 9, are eliminated. Said elimination drastically simplifies and facilitates the assembly operations. As may be seen in Figure 4, in the case of the invention, the position of the sleeve 14 is coaxial with respect to the tank, so as to guarantee a secure anchorage by means of the single screw connection system constituted by the sleeve itself and by the blocking ring nut associated thereto.

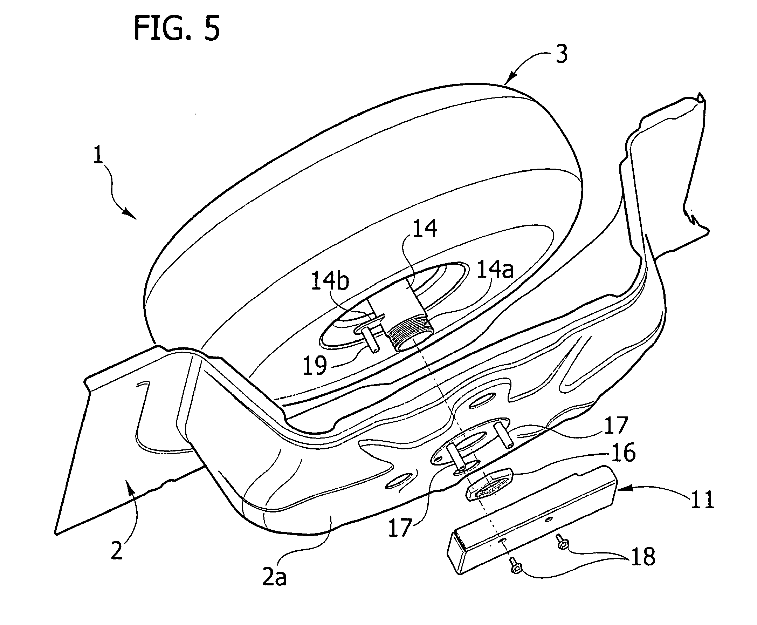

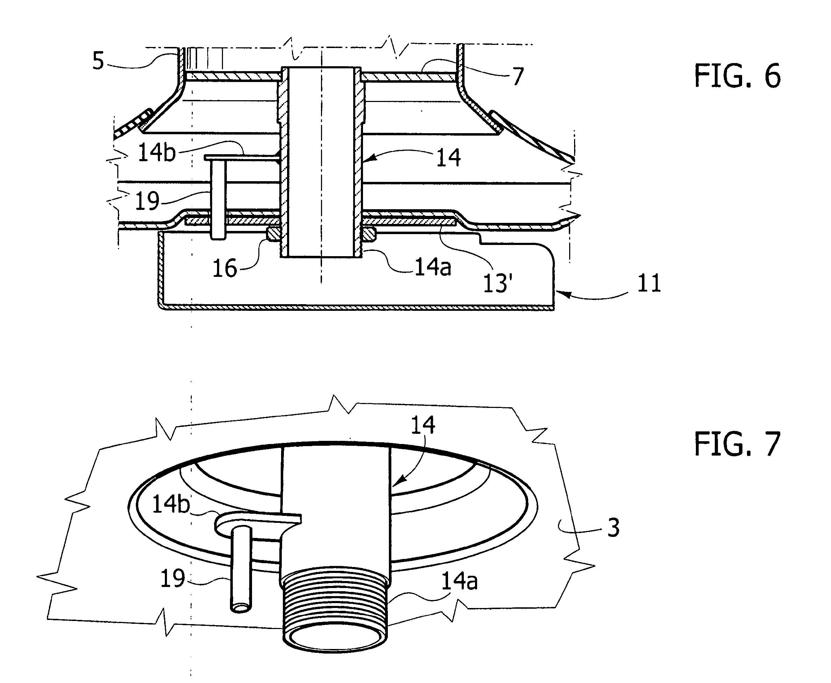

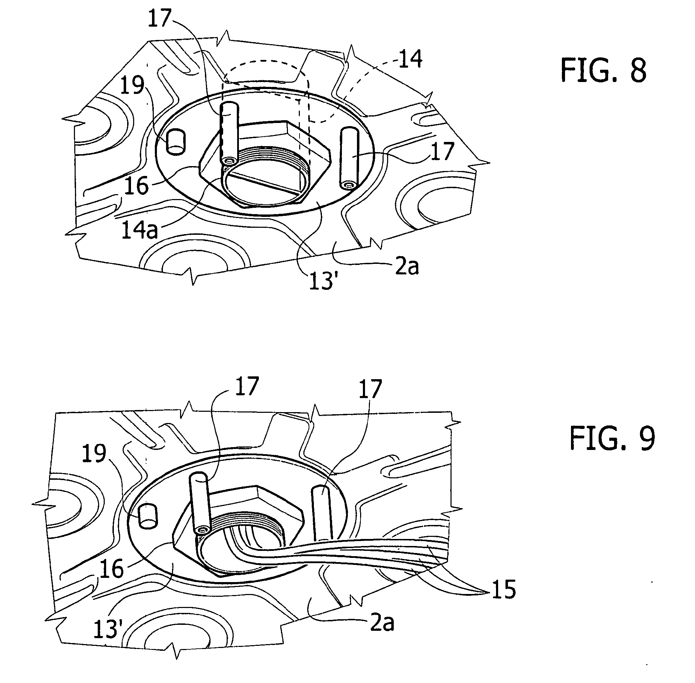

As may be seen in Figures 5 and 6, set between the blocking ring nut 16 and the bottom surface of the wall 2a of the floor panel is a counterplate 13', which has a central opening for traversal of the sleeve 14 and incorporates two spacer bushings 17 (see also Figures 8 and 9), fixed on bottom ends of which is the guard 11, with the aid of respective fixing screws 18 (Figure 5) that are engaged through the guard 11 and within threaded holes made in the spacer bushings 17. Also the assembly of the guard 11 hence proves simplified.

In order to enable correct angular positioning of the plate 13, welded externally to the sleeve 14 is a flange 14b, from which an axial pin 19, which engages a peripheral hole of the plate 13 as well as a corresponding hole of the wall 2a of the floor panel, projects at the bottom (Figure 9).

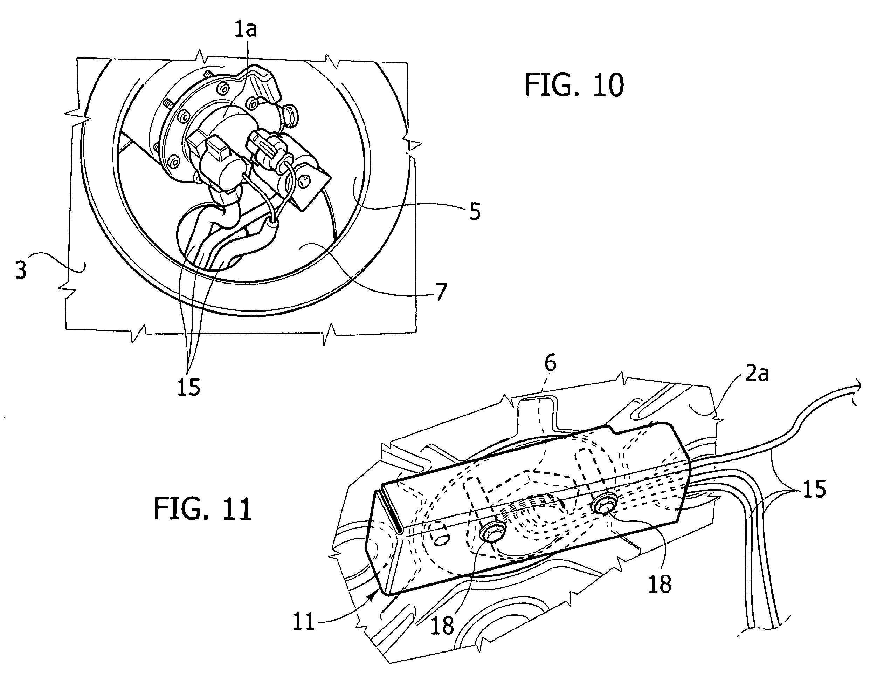

Figure 10 shows the detail of the service assembly 1a that projects within the space 6 and from which the cables and service pipes 15 that are guided through the sleeve 14 start. Exit of cables and pipes 15 underneath the floor panel is protected by the guard 11. As may be seen in Figure 11, the cables and the pipes then exit from one end of the guard.

As emerges clearly from the foregoing description, the present invention enables drastic reduction of the number of the parts, simplifies and facilitates the operations of installation of the tank on the motor vehicle and finally guarantees a perfect seal of the guide sleeve 14 against any leakage of gas vapours, thanks to the fact that it is made of metal material and is welded to the anchoring wall 7 of the tank. The use of the sleeve 14 for providing a single point for screwing the tank on the motor vehicle is compatible in particular with the mass-production requirements and with the use of automatic systems of assembly.

## Claims

1. An LPG tank for motor vehicles, comprising a metal casing (3) of a toroidal shape, defining an annular chamber (4) for containing LPG,
wherein said casing (3) includes a cylindrical wall (5) on the radially internal side of said annular chamber (4);
wherein fixed within said cylindrical wall (5) is a metal wall (7) for anchorage of the tank;
wherein said anchoring wall (7) is situated in a position axially at a distance from the resting surface of the tank (1) on the floor panel of the motor vehicle (2);
wherein said casing (3) is moreover provided with a sleeve (14) defining a guide passage for cables and service pipes (15) through said anchoring wall (7) and through the floor panel (2);
wherein moreover associated to said tank (1) are screw connection means for removably blocking said anchoring wall on the floor panel (2),
**and** further wherein:
- the aforesaid sleeve (14) has a metal body rigidly connected to said anchoring wall (7);
- the screw anchorage means are constituted by the sleeve (14) itself, said sleeve (14) having an externally threaded end portion (14a) prearranged to project at the bottom from the floor panel (2) and to receive a fixing ring nut (16),
said sleeve (14) is fixed to said anchoring wall (7) coaxially with respect to the tank,
said LPG tank being **characterized in that** externally welded to the aforesaid sleeve (14) is a flange (14b) carrying an axial pin (19) that engages through a hole of said floor panel (2a) and through a peripheral hole of a counterplate (13') set between the aforesaid blocking ring nut (16) and the bottom surface of the floor panel so as to constitute a reference for the correct angular position of said counterplate (13'), said counterplate (13') carrying two spacer bushings (17) for fixing, underneath the floor panel (2), a guard (11) that protects the cables and service pipes (15) exiting at the bottom from the tank and from the floor panel.

## Patentansprüche

1. LPG-Tank für ein Kraftfahrzeug, enthaltend ein kreisringförmiges Metallgehäuse (3), das eine ringförmige Kammer (4) zur Aufnahme von LPG bildet,
wobei das Gehäuse (3) eine zylindrische Wand (5) auf der radialen Innenseite der ringförmigen Kammer (4) enthält;
innerhalb der zylindrischen Wand (5) eine Metallwand zur Verankerung (7) des Tanks befestigt ist;
sich die Verankerungswand (7) an einer Position befindet, die von der Auflagefläche des Tanks (1) auf der Bodenplatte des Kraftfahrzeugs (2) axial beabstandet ist;
das Gehäuse (3) darüber hinaus mit einer Hülse (14) versehen ist, die einen Leitungsweg für Kabel und Versorgungsleitungen (15) durch die Verankerungswand (7) und durch die Bodenplatte (2) bildet;
der Tank (1) darüber hinaus mit Schraubverbindungseinrichtungen versehen ist, um die Verankerungswand lösbar an der Bodenplatte (2) zu arretieren,
und weiterhin:
- die zuvor erwähnte Hülse (14) einen Metallkörper hat, der mit der Verankerungswand (7) starr verbunden ist;
- die Schraubverankerungseinrichtungen durch die Hülse (14) an sich ausgebildet sind, wobei die Hülse (14) einen Außengewindeendabschnitt (14a) hat, der dazu vorgerichtet ist, an der Unterseite von der Bodenplatte (2) hervorzuragen und eine Befestigungsringmutter (16) aufzunehmen, und
- die Hülse (14) an der Verankerungswand (7) koaxial im Bezug auf den Tank befestigt ist,
wobei der LPG-Tank **dadurch gekennzeichnet ist, dass**
an die zuvor erwähnte Hülse (14) außen ein Flansch (14b) geschweißt ist, der einen axialen Zapfen (19) hält, der durch ein Loch der Bodenplatte (2a) und durch ein Umfangsloch einer Gegenplatte (13') greift, die zwischen der zuvor erwähnten Befestigungsringmutter (16) und der Unterseite der Bodenplatte angeordnet ist, um so einen Bezugspunkt für die korrekte Winkelstellung der Gegenplatte (13') zu bilden, wobei die Gegenplatte (13') zwei Abstandsbuchsen (17) zum Befestigen einer Schutzabdeckung (11) unter der Bodenplatte (2) hält, die die Kabel und die Versorgungsleitungen (15) schützt, die auf der Unterseite aus dem Tank und der Bodenplatte austreten.

## Revendications

1. Réservoir de GPL pour véhicules à moteur, comprenant un carter métallique (3) de forme toroïdale, définissant une chambre annulaire (4) pour contenir le GPL,
dans lequel ledit carter (3) comprend une paroi cylindrique (5) sur le côté radialement interne de ladite chambre annulaire (4) ;
dans lequel fixée à l'intérieur de ladite paroi cylindrique (5), on trouve une paroi métallique (7) pour l'ancrage du réservoir ;
dans lequel ladite paroi d'ancrage (7) est située dans une position à une certaine distance axiale de la surface de repos du réservoir (1) sur le panneau de plancher du véhicule à moteur (2) ;
dans lequel ledit carter (3) est de plus muni d'un manchon (14) définissant un passage de guidage pour des câbles et des tuyaux de service (15) à travers ladite paroi d'ancrage (7) et à travers le panneau de plancher (2) ;
dans lequel, de plus, associés audit réservoir (1), on trouve des moyens de raccordement à vis pour bloquer de manière amovible ladite paroi d'ancrage sur le panneau de plancher (2),
et dans lequel, de plus,
le manchon (14) mentionné précédemment a un corps métallique raccordé rigidement à ladite paroi d'ancrage (7) ;
les moyens d'ancrage à vis sont constitués par le manchon (14) lui-même, ledit manchon (14) ayant une partie d'extrémité extérieurement filetée (14a) pré-agencée pour faire saillie au niveau du fond du panneau de plancher (2) et pour recevoir un écrou annulaire de fixation (16),
ledit manchon (14) est fixé à ladite paroi d'ancrage (7) de manière coaxiale par rapport au réservoir,
ledit réservoir de GPL étant **caractérisé en ce que** soudé extérieurement au manchon (14) mentionné précédemment, on trouve un rebord (14b) supportant une broche axiale (19) qui s'engage à travers un trou dudit panneau de plancher (2a) et à travers un trou périphérique d'une contreplaque (13') placée entre l'écrou annulaire de blocage (16) mentionné précédemment et la surface inférieure du panneau de plancher afin de constituer une référence pour la position angulaire correcte de ladite contreplaque (13'), ladite contreplaque (13') supportant deux douilles d'espacement (17) pour fixer, au-dessous du panneau de plancher (2), une protection (11) qui protège les câbles et les tuyaux de service (15) sortant au fond du réservoir et du panneau de plancher.
